# EUROPEAN PATENT SPECIFICATION

(11) **EP 4 570 141 B1**
(45) Date of publication and mention of the grant of the patent: **11.02.2026**
(21) Application number: 23215845.1
(22) Date of filing: 12.12.2023
(51) Int. Cl.: A47J 31/36, A47J 31/44

(54) **AN AERATION MACHINE**
BELÜFTUNGSMASCHINE
MACHINE D'AÉRATION

(43) Date of publication of application: 18.06.2025
(73) Proprietor: Versuni Holding B.V., 5656 AE Eindhoven (NL)
(72) Inventor: DEN DULK, Jacob Cornelis Paul, 5656 AE Eindhoven (NL); BERENDS, Erik, 5656 AE Eindhoven (NL); VAN TOOR, Johannes Hendrikus, 5656 AE Eindhoven (NL); FAVERO, Andrea, 5656 AE Eindhoven (NL)
(74) Representative: Vollering, Stefanus Franciscus Maria

(56) References cited:
- AU-A1- 2019 233 586
- AU-A1- 2020 268 649
- US-B2- 10 624 490

## Description

### FIELD OF THE INVENTION

The present invention relates to an aeration machine, such as a capsule coffee machine.

### BACKGROUND OF THE INVENTION

In some machines, such as capsule coffee machines, aeration of liquid is desired. In the case of capsule coffee machines, aeration of liquid produces a crema, which improves a creamy taste and texture of a coffee, and improves the attractiveness of the coffee. AU 2020 268 649 A1 discloses a capsule coffee machine comprising jet producing means in order to receive a smooth beverage texture.

### SUMMARY OF THE INVENTION

According to a first specific aspect, there is provided an aeration machine. The aeration machine may be configured to supply liquid at a pressure of at least 400 kPa.

The aeration machine may comprise an orifice plate having an inlet side and an outlet side downstream of the inlet side. The orifice plate may comprise a plurality of jet passages defined between an inlet orifice at the inlet side and a jet orifice at the outlet side. The jet orifice may have a larger area than the inlet orifice. The jet passage may be substantially conical.

The aeration machine may comprise a deflector plate, e.g., downstream of the orifice plate. The deflector plate may comprise a plurality of impact members, e.g., in the form of pins. The impact members may project towards the orifice plate. Each impact member may comprise a concave bowl at its end. Each impact member may correspond to a respective jet passage (e.g., there may be as many impact members as jet passages and/or the impact members may be provided in at least partial alignment with the jet passages). A tangent of the bowl may meet an outlet edge or inner surface of the respective jet passage. Liquid supplied through the orifice plate may thereby impact the bowl and be projected back towards the jet passage, e.g., in a torus, aerating the liquid. The present aspect may form part of and/or be used in conjunction with any other aspect.

According to a second specific aspect, there is provided an aeration machine configured to supply liquid at a pressure of at least 400 kPa, the aeration machine comprising:
an orifice plate having an inlet side and an outlet side downstream of the inlet side, the orifice plate comprising a plurality of jet passages defined between an inlet orifice at the inlet side and a jet orifice at the outlet side, the jet orifice having a larger area than the inlet orifice such that the jet passage is substantially conical;
a deflector plate downstream of the orifice plate, the deflector plate comprising a plurality of impact members in the form of pins projecting towards the orifice plate wherein each pin comprises a concave bowl at its end, and wherein each pin corresponds to a respective jet passage,
wherein a tangent of the bowl meets an outlet edge or inner surface of the jet passage, such that liquid supplied through the orifice plate impacts the bowl and is projected back towards the jet passage in a torus, thereby aerating the liquid.

The pressurised liquid may be supplied to a part of the aeration machine, such as the orifice plate. The liquid may be supplied at a pressure of more than 1000 kPa, or more than 1500 kPa, or up to 2000 kPa. The tangent of the bowl may be defined as the tangent of the bowl at the edge of the bowl.

The aeration machine may be a capsule coffee machine. A capsule coffee machine may comprise the aeration machine. The coffee capsule machine may be configured to generate pressure in a liquid of at least 400kPa, such as more than 1000 kPa, or more than 1500 kPa, and/or up to 2000 kPa. The capsule coffee machine may be configured to supply the pressurised liquid to a part of the aeration machine, such as the orifice plate.

The plurality of jet passages may have inlet holes sized to ensure a pressure drop of at least 300 kPa across the orifice plate. For example, the jet passages may be configured to ensure a pressure drop to atmospheric pressure across the orifice plate. Having the bowls on pins ensures that the orifice plate and the deflector plate can be sufficiently far apart to lower the pressure, which may be less likely to burst the aerated bubbles which have been created by the bowls.

The orifice plate may comprise a plurality of studs projecting from the inlet side (e.g., in the same direction as the pins or impact members and/or away from the deflector plate). The studs may be configured to engage a capsule (e.g., a coffee capsule), such as the foil of the capsule. The studs may promote bursting of the foil (e.g., between studs) when pressurised liquid is injected into and/or passed through the capsule. Inlet orifices may be defined between adjacent studs.

The impact members may have the same length, e.g., such that the tips or distal ends of the impact members may be aligned and/or define a plane. The length of the impact members (e.g. pins) may be at least 7.25mm, and may be up to 9.25mm.

A plane touching (e.g., including) the tips of the impact members and parallel to the orifice plate may be offset from the inlet side away from the orifice plate by a distance of at least 4mm and/or at most 6.5mm. A plane touching the tips of the impact members and parallel to the orifice plate may be offset from the outlet side away from the orifice plate by a distance of at least one radius of the bowl, or at least twice the radius of the bowl. This may allow sufficient space to permit the deflection of liquid back towards the jet passage, such that a torus of liquid flow may be created. The aeration of the liquid may thereby be improved.

The bowl of each impact member or pin may be spherical. The bowl may comprise a spherical cap geometry. The radius of the sphere defining the bowl may be at least 0.75mm and/or at most 1.25mm. The depth and/or the radius of the bowl may be less than the radius of the sphere defining the spherical cap. The radius of the bowl (e.g., at its mouth) may be less than the radius of the impact members at their distal ends, e.g., such that an annular perimeter rim is provided about the concave bowls. The perimeter rim may extend transversely relative to the longitudinal axis of each pin.

A perpendicular distance between a centre of the sphere defining the bowl and a plane touching the tips of the impact members and parallel to the orifice plate plane may be at least 0.05mm and/or at most 0.6mm. For example, a radius of the sphere defining the bowl may be greater than a depth of the bowl by at least 0.05mm and/or at most 0.6mm.

The aeration machine may comprise as many impact members as jet passages. For example, for every jet passage there may be a corresponding impact member on the deflector plate. The impact members and the jet passages may be aligned, e.g., such that their longitudinal axes may be collinear.

The deflector plate may comprise a substantially flat or planar backing portion. The impact members may project from the planar backing portion. The impact members may be provided on the backing portion in a regular array (e.g., having fixed periodicities in along perpendicular directions to define a grid). The impact members may be unitary with the deflector plate.

The deflector plate may comprise an aperture (e.g., at least one aperture) for permitting a flow of liquid downstream of the deflector plate, such as towards an outlet of the aeration machine. The or each aperture may be provided in the planar backing portion of the deflector plate. The or each aperture may be elongate e.g., defined by a line or slot extending along the plane of the deflector plate. The deflector plate may comprise a plurality of apertures, such as a plurality of slots. The or each slot may extend over (e.g., have a length greater than) a plurality of periodicities of the array of impact members. The or each slot may have a width equal to a fraction of a periodicity of the array, such that the or each aperture may be provided between adjacent impact members. The slots may be provided in parallel (e.g., defined by parallel lines in the plane of the deflector plate).

The deflector plate and/or the orifice plate may comprise a plurality of aligning arms. The aligning arms may project towards the other of the orifice plate and/or the deflector plate respectively. The aligning arms may be configured to cooperate with the other of the orifice plate and/or the deflector plate to align the deflector plate with the orifice plate (e.g., such that impact pins are aligned with respective jet passages, optionally a longitudinal axis of each impact pin being aligned with a longitudinal axis of a respective jet passage). The deflector plate and/or the orifice plate may comprise a corresponding plurality of recesses to receive respective aligning arms.

The aligning arms may extend in parallel with the impact members (e.g., the longitudinal axes of the impact members). A plurality of aligning arms be provided equiangularly about one or more impact members. The aligning arms may have a stepped end surface.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a sectional side view through an aeration machine according to an embodiment of the invention;
Fig. 2 is a magnified sectional side view of a part of an aeration machine according to an embodiment of the invention;
Fig. 3 is a perspective view of a deflector plate according to an embodiment of the invention;
Fig. 4 is a perspective view of a deflector plate according to an embodiment of the invention; and
Fig. 5 is a perspective view of a deflector plate according to an embodiment of the invention.

Throughout the drawings, like reference numerals will be used to refer to like features.

### DETAILED DESCRIPTION OF EMBODIMENTS

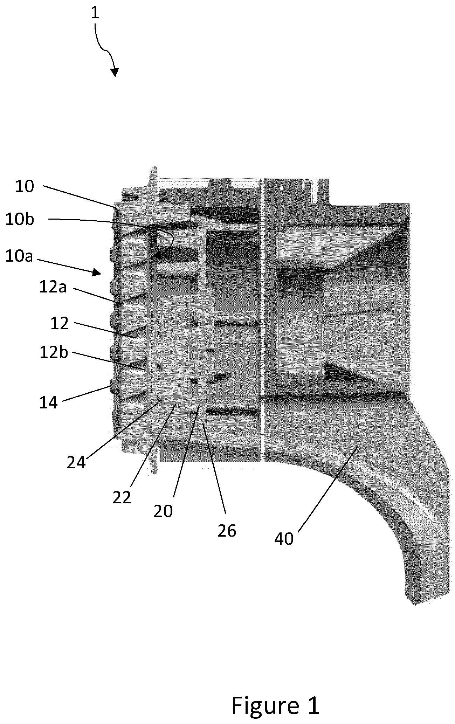

With reference to Fig. 1, an aeration machine 1 according to the present invention is described. The aeration machine 1 comprises a coffee machine, specifically a capsule coffee machine, having an orifice plate 10 and a deflector plate 20.

The orifice plate 10 comprises an inlet side 10a and an outlet side 10b, the inlet side 10a being provided upstream of the outlet side 10b relative to the flow of liquid through the aeration machine 1.

The orifice plate 10 comprises an array of jet passages 12 extending from the inlet side 10a to the outlet side 10b, each jet passage 12 having an inlet orifice 12a at the inlet side 10a and a jet orifice 12b at the outlet side 10b. The jet orifices 12b are larger in area than the respective inlet orifices 12a such that the jet passages 12 broaden towards the outlet side 10b. In the illustrated embodiment of Fig. 1, the jet passages 12 are substantially conical.

The jet passages 12, including the inlet orifices 12a, are shaped and dimensioned relative to the pressure supplied to the inlet side 10a of the orifice plate 10 such that a pre-determined pressure drop is achieved across the orifice plate 10. For example, liquid may be supplied to the orifice plate at a pressure of at least 400kPa, such as at least 1000kPa, such as at least 1500kPa and/or up to 2000kPa. The jet passages 12, including the orifice inlets 12a and the jet orifices 12b, may be shaped and dimensioned so as to achieve a pressure drop of at least 300kPa across the orifice plate 10. For example, when the liquid is supplied to the orifice plate 10 at a pressure of at least 400kPa, a pressure drop of at least approximately 300kPa may be achieved across the jet passages 12 (e.g., so that the liquid pressure drops to atmospheric pressure); when the liquid is supplied to the orifice plate 10 at a pressure of 2000kPa, a pressure drop of approximately 1900 kPa may be achieved across the jet passages 12 (e.g., so that the liquid pressure drops to atmospheric pressure across the orifice plate 10).

Downstream of the orifice plate 10, the aeration machine 1 comprises a deflector plate 20. The deflector plate 20 is configured to deflect the flow of liquid emerging from the jet passages 12 in order to promote the aeration of the liquid.

On the inlet side 10a, the orifice plate 10 comprises an array of studs 14 interspersed with the inlet orifices 12a and extending away from the plane of the deflector plate 20. In particular, the inlet orifices 12a are provided between adjacent studs 14 and vice versa. The studs 14 are configured to engage a coffee capsule (not shown), specifically a foil face of a coffee capsule, such that upon pressurisation of the coffee capsule, the foil preferentially perforates or bursts between adjacent studs 14 and in substantial alignment with a respective inlet orifice 12a.

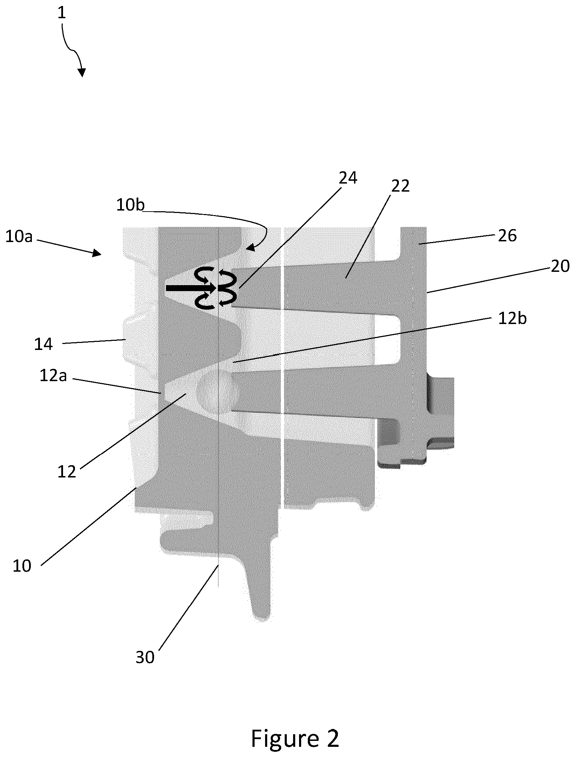

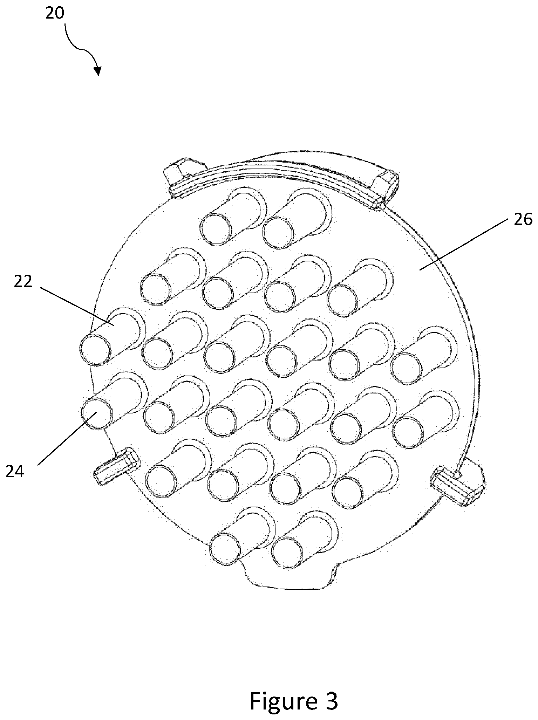

Although only shown in side sectional view in Figs. 1 and 2, it should be evident from the description of the deflector plate 20, 120, 220 of Figs. 3 to 5 that the jet passages 12, and thus the studs 14 interspersed therebetween, are provided in a two dimensional array extending into/out of the page of Figs. 1 and 2.

The deflector plate 20 comprises a plurality of impact members 22, specifically pins, projecting from a substantially planar backing portion 26 and towards the orifice plate 10. For illustrative purposes, one of the pins 22 in Fig. 1 is shown in side view, while the remaining pins are shown in sectional side view.

Each pin 22 is provided in substantial alignment with a respective jet passage 12 such that the pins 22 are provided in a two dimensional regular array (e.g., as shown in Figs. 3 to 5) corresponding with that of the jet passages 12 of the orifice plate 10.

Each pin 22 is axisymmetric about a longitudinal axis extending perpendicularly away from the plane of the backing portion 26 of the deflector plate 10. The pins 22 taper slightly in diameter with distance towards the orifice plate 10. Accordingly, the distal end or tip of each pin 22 has a smaller diameter than its base.

At its tip, each pin 22 comprises a concave bowl 24 configured to deflect a flow of pressurised liquid emerging from a respective jet passage back towards the jet passage. As illustrated by the lowermost pin 22 of Fig. 2, the concave bowls 24 have a spherical cap geometry, the depth of the spherical cap being less than the radius of the sphere defining the spherical cap. Further, the radius of the bowl 24 at its mouth is less than the radius of the pins 22 at their distal ends such that an annular perimeter rim is provided about the concave bowls 24, the perimeter rim extending transversely relative to the longitudinal axis of each pin 22. The annular perimeter rims thereby form the distalmost parts of the pins 22.

In the embodiment of Fig. 1, the distal ends of the pins 22 are offset from the jet passages 12 such that a tangent of each bowl 24 at the edge of the bowl 24 meets the outlet edge or lip of the jet passage 12. Specifically, in this example, the spheres defining the spherical cap geometries of the bowls 24 do not overlap with the jet passages 12.

In the embodiment of Fig. 2, the distal ends of the pins 22 are offset from the jet passages 12 by a shorter perpendicular distance such that a tangent of each bowl 24 at the edge of the bowl 24 meets or intersects an inner surface of the jet passage 12. Specifically, the centres of the spheres defining the spherical cap geometries of the bowls 24 define a plane 30 which intersects the jet passages 12.

Accordingly, although Fig. 2 shows a magnified view of a lower portion of the deflector plate 20 and orifice plate 10 of Fig. 1, the deflector plate 20 and the orifice plate 10 in the arrangement of Fig. 2 have a smaller perpendicular offset.

The exact dimensions of the bowls 24, as well as the separation between the bowls 24 and the inlet orifices 12a, may be dependent upon the speed of the liquid jets emerging from the jet passages 12. In an example, the spheres defining the bowls 24 may have a radius of at least 0.75mm and/or at most 1.25mm, such as 0.9mm. The radius of the sphere defining the bowls 24 may exceed a depth of the bowls by at least 0.05mm and/or at most 0.6mm, such as 0.1mm. That is, the plane defining the spherical cap may be offset from the centre of the sphere defining the spherical cap by at least 0.05mm and/or at most 0.6mm, such as 0.1mm. The tips of the pins 22 may be offset from the inlet orifices 12a by a distance of at least 4mm and/or at most 6.5mm, such as 5.5mm.

Fig. 3 shows a front perspective view of the deflector plate 20 of Figs. 1 and 2. The deflector plate 20 has a substantially circular and planar backing portion 26 from which the plurality of pins 22 project. The pins 22 are arranged in an array having regular periodicity along perpendicular directions such that a grid of pins 22 is defined. Specifically, the deflector plate 20 has 26 pins 22 arranged in a 6x6 array, having a central 4x4 square with additional pairs of pins provided at 90 degrees to one another. The grid of pins 22 thereby substantially covers the surface of the backing portion 26.

The periodicity of the array is approximately twice the diameter of the base of the pins 22, such that adjacent pins 22 are spaced apart by approximately the diameter of a pin 22.

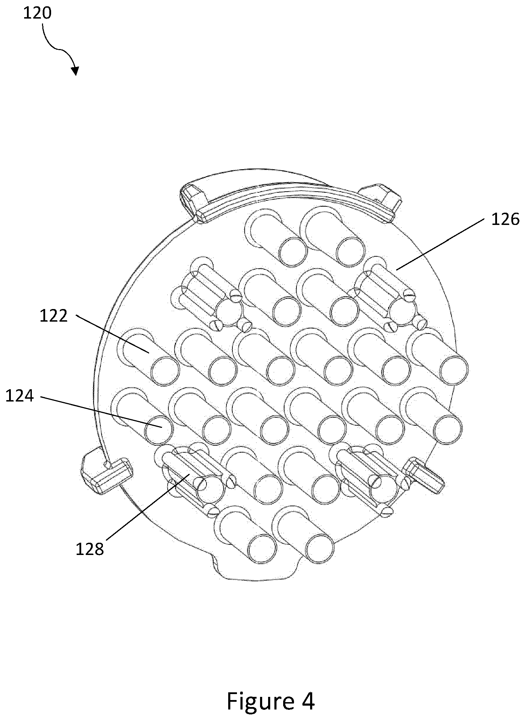

Fig. 4 shows a front perspective view of an alternative deflector plate 120 having the same 6x6 array of pins 122. The deflector plate 120 is identical to the deflector plate 20 with the exception that the deflector plate 120 additionally comprises a number of aligning arms 128 projecting away from the backing portion 126 and in parallel with the long axes of the pins 122. In the illustrated embodiment of Fig. 4, three aligning arms 128 are provided equiangularly about each of four pins 122 which define the corners of the central 4x4 square of the array of pins 122.

The aligning arms 128 are substantially cylindrical with a stepped end face. In particular, the aligning arms 128 have stepped end faces comprising a first surface which extends substantially transversely to a longitudinal axis of each aligning arm 128 and a second surface which is inclined to the longitudinal axis of the aligning arm 128. The inclined second surface slopes downwardly and away from the transversely extending surface.

The transversely extending surface of each aligning arm 28 is provided proximate the respective pin 122 while the inclined surface is provided distally to, and sloping away from, the respective pin 122.

The aligning arms 128 are configured to cooperate with the orifice plate 10, such as by engaging a corresponding recess (not shown), so as to ensure that each of the pins 122 is provided in alignment with a respective jet passage 12 (e.g., such that the longitudinal axis of a pin 122 is collinear with a longitudinal axis of the respective jet passage 12).

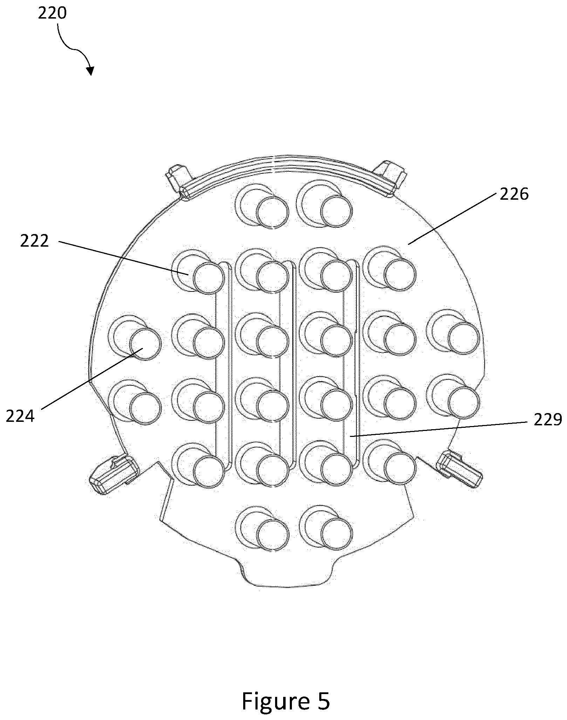

Fig. 5 shows a front perspective view of an alternative deflector plate 220 having the same 6x6 regular array of pins 222. The deflector plate 220 is identical to the deflector plate 20 with the exception that the deflector plate 220 additionally comprises a plurality of apertures 229 in the backing portion 226. The apertures 229 extend through the thickness of the backing portion 126 such that direct fluid communication from one side of the deflector plate 220 to the other side is permitted.

In the embodiment of Fig. 5, the apertures 229 comprise slots 229 interspersed by columns of pins 222, the slots 229 extending over a plurality of periodicities of the array of impact members, specifically over at least three periods of the array. The width of each slot 229 is less than a period of the array, specifically around half the period of the array, such that the slots 229 are provided between adjacent pins 22. The slots 229 are provided in parallel and within the central 4x4 square of the array of pins 22.

In use, a coffee capsule (not shown) is urged against the studs 14 by a downstream force applied to the coffee capsule. The downstream force may be provided by a component engaging an upstream face of the capsule and/or by a pressurised liquid injected into the coffee capsule. The liquid injected into the coffee capsule may be pressurised to at least 400kPa, such as more than 1000 kPa, such as more than 1500 kPa, and/or up to 2000 kPa.

The engagement of the foil of the coffee capsule by the studs 14 causes the foil to perforate or burst between adjacent studs 14 such that liquid containing dissolved and/or suspended coffee components exits the coffee capsule in alignment with the inlet orifices 12a. As the pressurised liquid passes through the jet passages 12, a pressure drop occurs due to the shape and dimensions of the jet passages 12, including the narrow inlet orifices 12a and the broadening dimensions towards the jet orifice 12b.

The liquid emerging from the jet passages 12 then impacts the concave bowls 24 of the pins 22. The spherical cap geometry of the bowls 24, including the tangent of the bowls 24 at their edges, deflects the liquid in an upstream direction back towards the respective jet passage 12. The continued downstream flow of liquid though the jet passage 12, combined with the deflected flow from the bowls 24, encourages the formation of a torus of liquid circulation, as indicated at the uppermost jet passage 12 and pin 22 of Fig. 2. This toroidal liquid circulation promotes the incorporation of air, present in the region between the deflector plate 20 and the orifice plate 10, into the liquid so as to promote the aeration of the liquid. When the liquid is coffee, the degree of crema generation is thereby increased.

By virtue of the slots 229 and/or the spaces between adjacent pins 22, 122, 222, the aerated liquid passes downstream of the deflector plate 20 and into the outlet passage 40 (Fig. 1).

### Alternative embodiments

Although the deflector plate 20 has been described as having as many pins 22 as there are jet passages, the deflector plate 20 may instead comprise fewer pins 22 than there are jet passages 12. Additionally or alternatively, the pins 22 may be provided other than in a regular array. Similarly, in an alternative embodiment (not shown), concave bowls 22 may be provided on a subset of the pins 22.

Although the aligning arms 128 and the slots 229 have been described in relation to the embodiments of Figs. 4 and 5 respectively, it will be understood by the skilled person that the aligning arms 128 and the slots 229 may be provided as part of the same deflector plate 20, 120, 220 without departing from the scope of the present disclosure. Additionally or alternatively, the aligning arms 128 may be provided from the outlet side 10b of the orifice plate rather than from the deflector plate.

Further, although the aeration machine 1 of the present invention has been described in relation to a coffee machine, it will be understood that the aeration machine may comprise a machine other than a coffee machine. For example, a machine that uses a consumable to produce a whipped, aerated or foamed substance, e.g., hot beverages, such as hot chocolate, nitro-coffee, or iced coffees; whipped cream; ice cream; milk for foaming (for preparation of cappuccino, latte drinks, tea), optionally where the cream or milk is provided in a capsule-like manner, where the studs 14 of the orifice plate 10 may promote perforation of the capsule.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An aeration machine (1) configured to supply liquid at a pressure of at least 400 kPa, the aeration machine comprising:
an orifice plate (10) having an inlet side (10a) and an outlet side (10b) downstream of the inlet side, the orifice plate comprising a plurality of jet passages (12) defined between an inlet orifice (12a) at the inlet side and a jet orifice (12b) at the outlet side, the jet orifice having a larger area than the inlet orifice such that the jet passage is substantially conical;
a deflector plate (20) downstream of the orifice plate, the deflector plate comprising a plurality of impact members (22) in the form of pins projecting towards the orifice plate, the aeration machine being **characterized in that** each pin comprises a concave bowl (24) at its end, and wherein each pin corresponds to a respective jet passage,
wherein a tangent of the bowl meets an outlet edge or inner surface of the jet passage, such that liquid supplied through the orifice plate impacts the bowl and is projected back towards the jet passage in a torus, thereby aerating the liquid.

2. An aeration machine according to claim 1, wherein the orifice plate comprises a plurality of studs projecting from the inlet side, with the inlet orifices defined between adjacent studs, wherein the studs of the orifice plate are configured to engage with foil of a capsule to promote bursting of the foil when pressurised liquid is passed through the capsule.

3. An aeration machine according to claim 1 or 2, wherein a plane touching the tips of the impact members and parallel to the orifice plate is offset from the inlet side away from the orifice plate by a distance of at least 4mm and/or at most 6.5mm.

4. An aeration machine according to any preceding claim, wherein a plane touching the tips of the impact members and parallel to the orifice plate is offset from the outlet side away from the orifice plate by a distance of at least one radius of the bowl, or at least twice the radius of the bowl.

5. An aeration machine according to any preceding claim, wherein for every jet passage there is a corresponding impact member on the deflector plate, such that there are as many impact members as jet passage.

6. An aeration machine according to any preceding claim, wherein the deflector plate comprises at least one aperture for permitting flow of liquid to an outlet of the aeration machine.

7. An aeration machine according to claim 6, wherein the aperture is a slot defined by a line extending along the plane of the deflector plate.

8. An aeration machine according to claim 7, wherein a plurality of apertures are defined by parallel lines extending along the plane of the deflector plate.

9. An aeration machine according to any preceding claim, wherein the deflector plate and/or the orifice plate comprises a plurality of aligning arms projecting towards the other of the orifice plate and/or deflector plate respectively, wherein the aligning arms are configured to cooperate with the other of the orifice plate and/or the deflector plate to align the deflector plate with the orifice plate.

10. An aeration machine according to claim 9, wherein the deflector plate and/or the orifice plate comprises a corresponding plurality of recesses to receive respective aligning arms.

11. An aeration machine according to any preceding claim, wherein the bowl is spherical with a radius of at least 0.75mm and/or at most 1.25mm.

12. An aeration machine according to any preceding claim, wherein the bowl is spherical, and wherein a perpendicular distance between a centre of the sphere defining the bowl and a plane touching the tips of the impact members and parallel to the orifice plate plane is at least 0.05mm and/or at most 0.6mm.

13. An aeration machine according to any preceding claim, wherein the impact members are unitary with the deflector plate.

14. An aeration machine according to any preceding claim, wherein the pin length is at least 7.25mm.

## Patentansprüche

1. Belüftungsmaschine (1), die dazu konfiguriert ist, Flüssigkeit mit einem Druck von mindestens 400 kPa zu liefern, wobei die Belüftungsmaschine Folgendes umfasst:
eine Drosselscheibe (10), die eine Einlassseite (10a) und eine Auslassseite (10b) stromabwärts der Einlassseite aufweist, wobei die Drosselscheibe eine Vielzahl von Strahlkanälen (12) umfasst, die zwischen einer Einlassöffnung (12a) an der Einlassseite und einer Strahlöffnung (12b) an der Auslassseite definiert sind, wobei die Strahldrosselblende eine größere Fläche als die Einlassöffnung aufweist, sodass der Strahlkanal im Wesentlichen konisch ist;
ein Abweisblech (20) stromabwärts der Drosselscheibe, wobei das Abweisblech eine Vielzahl von Prallelementen (22) in Form von Stiften umfasst, die in Richtung der Drosselscheibe vorstehen, wobei die Belüftungsmaschine **dadurch gekennzeichnet ist, dass** jeder Stift an seinem Ende eine konkave Schale (24) umfasst und wobei jeder Stift einem jeweiligen Strahlkanal entspricht,
wobei eine Tangente der Schale auf eine Auslasskante oder Innenfläche des Strahlkanals trifft, sodass die durch die Drosselscheibe zugeführte Flüssigkeit auf die Schale trifft und in einem Torus in Richtung des Strahlkanals zurückgeworfen wird, wodurch die Flüssigkeit belüftet wird.

2. Belüftungsmaschine nach Anspruch 1, wobei die Drosselscheibe eine Vielzahl von Bolzen umfasst, die von der Einlassseite hervorstehen, wobei die Einlassdrosselblenden zwischen benachbarten Bolzen definiert sind, wobei die Bolzen der Drosselscheibe dazu konfiguriert sind, mit der Folie einer Kapsel in Eingriff zu kommen, um ein Aufplatzen der Folie zu fördern, wenn unter Druck stehende Flüssigkeit durch die Kapsel geleitet wird.

3. Belüftungsmaschine nach Anspruch 1 oder 2, wobei eine Ebene, die die Spitzen der Prallelemente berührt und parallel zur Drosselscheibe verläuft, von der Einlassseite weg von der Drosselscheibe um einen Abstand von mindestens 4mm und/oder höchstens 6,5mm versetzt ist.

4. Belüftungsmaschine nach einem vorstehenden Anspruch, wobei eine Ebene, die die Spitzen der Prallelemente berührt und parallel zur Drosselscheibe verläuft, von der Auslassseite weg von der Drosselscheibe um einen Abstand von mindestens einem Radius der Schale oder mindestens dem doppelten Radius der Schale versetzt ist.

5. Belüftungsmaschine nach einem vorstehenden Anspruch, wobei für jeden Strahlkanal ein entsprechendes Prallelement auf dem Abweisblech vorhanden ist, sodass es so viele Prallelemente wie Strahlkanäle gibt.

6. Belüftungsmaschine nach einem vorstehenden Anspruch, wobei das Abweisblech mindestens eine Öffnung aufweist, um Flüssigkeitsströmung zu einem Auslass der Belüftungsmaschine zu ermöglichen.

7. Belüftungsmaschine nach Anspruch 6, wobei die Öffnung ein Schlitz ist, der durch eine Linie definiert ist, die sich entlang der Ebene des Abweisblechs erstreckt.

8. Belüftungsmaschine nach Anspruch 7, wobei eine Vielzahl von Öffnungen durch parallele Linien definiert sind, die sich entlang der Ebene des Abweisblechs erstrecken.

9. Belüftungsmaschine nach einem vorstehenden Anspruch, wobei das Abweisblech und/oder die Drosselscheibe eine Vielzahl von Ausrichtungsarmen aufweist, die in Richtung des anderen der Drosselscheibe und/oder des Abweisblechs vorstehen, wobei die Ausrichtungsarme dazu konfiguriert sind, mit dem anderen der Drosselscheibe und/oder des Abweisblechs zusammenwirken, um das Abweisblech mit der Drosselscheibe auszurichten.

10. Belüftungsmaschine nach Anspruch 9, wobei das Abweisblech und/oder die Drosselscheibe eine entsprechende Vielzahl von Aussparungen umfasst, um jeweilige Ausrichtungsarme aufzunehmen.

11. Belüftungsmaschine nach einem vorstehenden Anspruch, wobei die Schale kugelförmig mit einem Radius von mindestens 0,75mm und/oder höchstens 1,25mm ist.

12. Belüftungsmaschine nach einem vorstehenden Anspruch, wobei die Schale kugelförmig ist, und wobei ein senkrechter Abstand zwischen einem Mittelpunkt der Kugel, die die Schale definiert, und einer Ebene, die die Spitzen der Prallelemente berührt und parallel zur Ebene der Drosselscheibe ist, mindestens 0,05mm und/oder höchstens 0,6mm beträgt.

13. Belüftungsmaschine nach einem vorstehenden Anspruch, wobei die Prallelemente eine Einheit mit dem Abweisblech bilden.

14. Belüftungsmaschine nach einem vorstehenden Anspruch, wobei die Stiftlänge mindestens 7,25mm beträgt.

## Revendications

1. Machine d'aération (1) configurée pour fournir du liquide à une pression d'au moins 400 kPa, la machine d'aération comprenant :
une plaque à orifice (10) présentant un côté d'entrée (10a) et un côté de sortie (10b) en aval du côté d'entrée, la plaque à orifice comprenant une pluralité de passages de jet (12) définis entre un orifice d'entrée (12a) du côté d'entrée et un orifice de jet (12b) du côté de sortie, l'orifice de jet présentant une surface supérieure à l'orifice d'entrée de sorte que le passage de jet est sensiblement conique ;
une plaque de déflecteur (20) en aval de la plaque à orifice, la plaque de déflecteur comprenant une pluralité d'organes d'impact (22) sous la forme de broches faisant saillie vers la plaque à orifice, la machine d'aération étant **caractérisée en ce que** chaque broche comprend une cuvette concave (24) à son extrémité, et dans laquelle chaque broche correspond à un passage de jet respectif,
dans laquelle une tangente de la cuvette rencontre un bord de sortie ou une surface intérieure du passage de jet, de sorte que du liquide fourni par l'intermédiaire de la plaque à orifice impacte la cuvette et est reprojeté vers le passage de jet dans un tore, aérant ainsi le liquide.

2. Machine d'aération selon la revendication 1, dans laquelle la plaque à orifice comprend une pluralité de goujons faisant saillie depuis le côté d'entrée, avec les orifices d'entrée étant définis entre des goujons adjacents, dans laquelle les goujons de la plaque à orifice sont configurés pour s'engager avec une feuille d'une capsule pour favoriser l'éclatement de la feuille lorsque du liquide sous pression est passé à travers la capsule.

3. Machine d'aération selon la revendication 1 ou 2, dans laquelle un plan touchant les pointes des organes d'impact et parallèle à la plaque à orifice est décalé du côté d'entrée à l'écart de la plaque à orifice d'une distance d'au moins 4 mm et/ou d'au plus 6,5 mm.

4. Machine d'aération selon une quelconque revendication précédente, dans laquelle un plan touchant les pointes des organes d'impact et parallèle à la plaque à orifice est décalé du côté de sortie à l'écart de la plaque à orifice d'une distance d'au moins un rayon de la cuvette, ou d'au moins deux fois le rayon de la cuvette.

5. Machine d'aération selon une quelconque revendication précédente, dans laquelle pour chaque passage de jet, il y a un organe d'impact correspondant sur la plaque de déflecteur, de sorte qu'il y a autant d'organes d'impact que de passage de jet.

6. Machine d'aération selon une quelconque revendication précédente, dans laquelle la plaque de déflecteur comprend au moins une ouverture pour permettre un écoulement de liquide vers une sortie de la machine d'aération.

7. Machine d'aération selon la revendication 6, dans laquelle l'ouverture est une fente définie par une ligne s'étendant le long du plan de la plaque de déflecteur.

8. Machine d'aération selon la revendication 7, dans laquelle une pluralité d'ouvertures est définie par des lignes parallèles s'étendant le long du plan de la plaque de déflecteur.

9. Machine d'aération selon une quelconque revendication précédente, dans laquelle la plaque de déflecteur et/ou la plaque à orifice comprend une pluralité de bras d'alignement faisant saillie vers l'autre de la plaque à orifice et/ou plaque de déflecteur respectivement, dans laquelle les bras d'alignement sont configurés pour coopérer avec l'autre de la plaque à orifice et/ou la plaque de déflecteur pour aligner la plaque de déflecteur avec la plaque à orifice.

10. Machine d'aération selon la revendication 9, dans laquelle la plaque de déflecteur et/ou la plaque à orifice comprend une pluralité correspondante d'évidements pour recevoir des bras d'alignement respectifs.

11. Machine d'aération selon une quelconque revendication précédente, dans laquelle la cuvette est sphérique avec un rayon d'au moins 0,75 mm et/ou d'au plus 1,25 mm.

12. Machine d'aération selon une quelconque revendication précédente, dans laquelle la cuvette est sphérique, et dans laquelle une distance perpendiculaire entre un centre de la sphère définissant la cuvette et un plan touchant les pointes des organes d'impact et parallèle au plan de plaque à orifice est d'au moins 0,05 mm et/ou d'au plus 0,6 mm.

13. Machine d'aération selon une quelconque revendication précédente, dans laquelle les organes d'impact sont unitaires avec la plaque de déflecteur.

14. Machine d'aération selon une quelconque revendication précédente, dans laquelle la longueur de broche est d'au moins 7,25 mm.
